(19) Europäisches Patentamt
European Patent Office
Office européen des brevets

(11) **EP 3 708 984 B1**

(12) **EUROPÄISCHE PATENTSCHRIFT**

(45) Veröffentlichungstag und Bekanntmachung des Hinweises auf die Patenterteilung:
**29.11.2023   Patentblatt 2023/48**

(21) Anmeldenummer: **20161112.6**

(22) Anmeldetag: **05.03.2020**

(51) Internationale Patentklassifikation (IPC):
**G01K 17/08** (2006.01)    **G01K 17/20** (2006.01)

(52) Gemeinsame Patentklassifikation (CPC):
**G01K 17/08; G01K 17/20**

(54) **ERMITTLUNGSVERFAHREN, MINDESTENS ZUR ERMITTLUNG MINDESTENS EINES C-WERTES FÜR EINEN ELEKTRONISCHEN HEIZKOSTENVERTEILER, PARAMETRIERVERFAHREN ZUR PARAMETRIERUNG DES ELEKTRONISCHEN HEIZKOSTENVERTEILERS UND VORRICHTUNG ZUR DURCHFÜHRUNG MINDESTENS DES ERMITTLUNGSVERFAHRENS**

DETERMINATION METHOD, AT LEAST FOR DETERMINING AT LEAST ONE C-VALUE FOR AN ELECTRONIC HEATING COST DISTRIBUTOR, PARAMETERIZATION METHOD FOR PARAMETERIZING THE ELECTRONIC HEATING COST DISTRIBUTOR AND DEVICE FOR CARRYING OUT AT LEAST THE DETERMINATION METHOD

PROCÉDÉ DE DÉTERMINATION, PERMETTANT AU MOINS DE DÉTERMINER AU MOINS UNE VALEUR C POUR UN RÉPARTITEUR ÉLECTRONIQUE DE FRAIS DE CHAUFFAGE, PROCÉDÉ DE PARAMÉTRAGE DU RÉPARTITEUR ÉLECTRONIQUE DE FRAIS DE CHAUFFAGE ET DISPOSITIF PERMETTANT DE METTRE EN UVRE AU MOINS LE PROCÉDÉ DE DÉTERMINATION

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **11.03.2019   DE 102019106074**

(43) Veröffentlichungstag der Anmeldung:
**16.09.2020   Patentblatt 2020/38**

(73) Patentinhaber: QUNDIS GmbH
**99098 Erfurt (DE)**

(72) Erfinder: **KUHN, Jens**
**98693 Ilmenau (DE)**

(74) Vertreter: **Liedtke & Partner Patentanwälte**
**Gerhart-Hauptmann-Straße 10/11**
**99096 Erfurt (DE)**

(56) Entgegenhaltungen:
**EP-A2- 1 770 469        DE-A1- 19 800 041**
**DE-B3-102005 045 198    DE-U1- 9 317 309**

**Beschreibung**

Die Erfindung betrifft ein Ermittlungsverfahren, mindestens zur Ermittlung mindestens eines c-Wertes für einen elektronischen Heizkostenverteiler, und eine Vorrichtung zur Durchführung mindestens des Ermittlungsverfahrens.

Aus dem Stand der Technik ist es allgemein bekannt, die c-Werte und Kc-Werte in einem Heizkörperprüfstand mit Mustern des Heizkostenverteilers und des Heizkörpers in einem Basiszustand zu ermitteln und in entsprechenden Datenbanken bereitzustellen.

Des Weiteren ist es aus dem Stand der Technik allgemein bekannt, dass die c-Werte und Kc-Werte für unbekannte Heizkörper auch durch Ähnlichkeitsannahmen geschätzt und in Datenbanken bereitgestellt werden.

In der DE 10 2005 045 198 B3 werden ein Verfahren und eine Vorrichtung zur Bestimmung von Wärmekenndaten eines Heizkörpers beschrieben. Die Heizkörpertemperatur und die Raumtemperatur werden gemessen und mit einer Korrekturgröße in die gewünschten Wärmekenndaten umgerechnet. Die Korrekturgröße hängt von dem aktuellen Arbeitspunkt des Heizkörpers ab, welcher durch die Heizkörpervorlauftemperatur, die Heizkörperrücklauftemperatur, die Heizkörperumgebungstemperatur, den Heizkörpermassenstrom und/oder die Heizkörperventilstellung bestimmbar ist.

Aus der DE 93 17 309 U1 ist eine mobile c-Wert-Erfassungsanlage bekannt, umfassend Temperaturfühler zum Bestimmen der Temperatur der Messflüssigkeit in einem Heizkostenverteiler, der an einem installierten Heizkörper angebracht ist, sowie der Vorlauftemperatur und der Rücklauftemperatur am Heizkörper, eine Luftmessstelle zum Bestimmen der Lufttemperatur, ein Stellglied, das auf ein Thermostatventil des Heizkörpers einwirkt, um einen bestimmten Massenstrom des Heizmittels einzustellen, und einen Rechner mit einer daran angeschlossenen Messbox zum Ansteuern des Stellgliedes, zum Erfassen der verschiedenen Temperaturen und zum Berechnen des Massenstromverhältnisses zwischen dem eingestellten Massenstrom und einem Norm-Massenstrom und des c-Wertes aus den Temperaturen. In der DE 198 00 041 A1 wird ein Verfahren zur Bestimmung der dem als Maß für die thermische Ankopplung von insbesondere elektronischen Heizkostenverteilern an den jeweiligen Heizkörper dienenden c-Wert zugrunde liegenden Werte Heizmediumtemperatur im Heizkörper am Ort des Sensors und Heizkörpersensortemperatur bei gegebener/bekannter Raumlufttemperatur und gegebener mittlerer Heizmediumtemperatur beschrieben, wobei sich die mittlere Heizmediumtemperatur aus der Heizmediumvorlauftemperatur und der Heizmediumrücklauftemperatur berechnet. Die Heizmediumtemperatur im Heizkörper am Ort des Sensors wird durch eine thermischhydraulische Simulation des Heizkörpers und des Heizmediums bestimmt und die Heizkörpersensortemperatur wird mittels der Finite-Elemente-Methode bestimmt. Der Erfindung liegt die Aufgabe zu Grunde, ein gegenüber dem Stand der Technik verbessertes Ermittlungsverfahren, mindestens zur Ermittlung mindestens eines c-Wertes für einen elektronischen Heizkostenverteiler, und eine gegenüber dem Stand der Technik verbesserte Vorrichtung zur Durchführung mindestens des Ermittlungsverfahrens anzugeben.

Die Aufgabe wird erfindungsgemäß gelöst durch ein Ermittlungsverfahren, mindestens zur Ermittlung mindestens eines c-Wertes für einen elektronischen Heizkostenverteiler mit den Merkmalen des Anspruchs 1 und eine Vorrichtung zur Durchführung mindestens des Ermittlungsverfahrens mit den Merkmalen des Anspruchs 6.

Vorteilhafte Ausgestaltungen der Erfindung sind Gegenstand der abhängigen Ansprüche.

Das Ermittlungsverfahren wird insbesondere mit einer im Folgenden näher beschriebenen Vorrichtung zur Durchführung des Ermittlungsverfahrens und beispielsweise auch eines im Folgenden näher beschriebenen Parametrierverfahrens durchgeführt, wobei dieses Parametrierverfahren vorteilhafterweise ebenfalls mittels dieser Vorrichtung durchgeführt wird.

Unter Inbetriebnahme des Heizkörpers ist insbesondere zu verstehen, dass der Heizkörper von einer, insbesondere mittels eines Heizkessels, geheizten Temperierflüssigkeit, insbesondere Wasser, durchströmt wird und an einem vorgesehenen Arbeitspunkt, insbesondere bezüglich Vorlauftemperatur und Massestrom bzw. Betriebsdruck, einer Heizungsanlage betrieben wird. Hierzu sind oder werden ein Vorlauf und ein Rücklauf des Heizkörpers geöffnet.

Die oben erwähnten Temperaturen, d. h. die mittlere Oberflächentemperatur, die Vorlauftemperatur, die Rücklauftemperatur und/oder die Raumlufttemperatur, werden jeweils erfindungsgemäß nicht mit den Temperatursensoren des elektronischen Heizkostenverteilers, sondern mit mindestens einem externen Thermometer und/oder mit mindestens einem externen Temperatursensor, insbesondere mit mindestens einem Thermometer und/oder mit mindestens einem, insbesondere vorrichtungsinternen, Temperatursensor einer Vorrichtung zur Durchführung mindestens des Ermittlungsverfahrens, ermittelt. Bezüglich der Vorlauftemperatur wird vorteilhafterweise die Oberflächentemperatur am Vorlauf des Heizkörpers ermittelt, insbesondere gemessen, und als Vorlauftemperatur verwendet. Bezüglich der Rücklauftemperatur wird vorteilhafterweise die Oberflächentemperatur am Rücklauf des Heizkörpers ermittelt, insbesondere gemessen, und als Rücklauftemperatur verwendet.

Die mittlere Oberflächentemperatur und/oder die Vorlauftemperatur und/oder die Rücklauftemperatur werden jeweils insbesondere von außen ermittelt, insbesondere gemessen, d. h. die mittlere Oberflächentemperatur an einer, insbesondere dem Raum zugewandten, Außenoberfläche des Heizkörpers und/oder die Vorlauftemperatur als Oberflächentemperatur an einer, insbesondere dem Raum zugewandten, Außenoberfläche des Vorlaufs des Heizkörpers, insbesondere des Vorlaufanschlusses des Heizkörpers, und/oder die Rücklauftemperatur als Oberflächentemperatur an einer, insbesondere dem Raum zugewandten, Außenoberfläche des Rücklaufs des Heizkörpers, insbesondere des Rücklaufanschlusses des Heizkörpers. Insbesondere werden die mittlere Oberflächentemperatur und/oder die Vorlauftemperatur und/oder die Rücklauftemperatur jeweils nicht mittels Sensoren und/oder Thermometern im Inneren des Heizkörpers und/oder des Vorlaufs und/oder des Rücklaufs gemessen, d. h. insbesondere nicht mittels Sensoren und/oder Thermometern, die von der Temperierflüssigkeit des Heizkörpers beispielsweise direkt oder über eine Tauchhülse umgeben und/oder umströmt sind, sondern über eine jeweilige Außenoberfläche.

Die mittlere Raumlufttemperatur wird beispielsweise durch Ermittlung, insbesondere Messung, der Luft des Raums ermittelt, beispielsweise indem das Thermometer und/oder der Temperatursensor von dieser Luft des Raums umgeben und/oder umströmt und somit mit dieser thermisch gekoppelt ist. Alternativ oder zusätzlich kann die mittlere Raumlufttemperatur beispielsweise ermittelt werden, indem eine Temperatur einer Oberfläche eines sich im Raum befindlichen Gegenstandes, welcher der Raumluft und somit deren Raumlufttemperatur ausgesetzt ist und sich somit daran angepasst hat, ermittelt, insbesondere gemessen, wird. Hierfür wird ein Gegenstand gewählt, dessen Temperatur ausschließlich oder zumindest überwiegend, insbesondere zumindest im Wesentlichen, von der ihn umgebenden Raumluft beeinflusst wird und insbesondere selbst nicht durch von der Raumluft abweichende Einflüsse geheizt oder gekühlt wird, d. h. insbesondere keine Komponenten aufweist, die durch eine, insbesondere von der Raumluft unabhängige, Energiezufuhr, insbesondere eine elektrische Energiezufuhr, geheizt oder gekühlt werden oder sich aufheizen oder abkühlen. Als ein solcher Gegenstand, an dessen Oberfläche die Temperatur gemessen und als Raumlufttemperatur verwendet werden kann, eignet sich insbesondere ein Möbel, d. h. ein Möbelstück, welches dem Raum zugeordnet ist und daher üblicherweise, d. h. insbesondere über längere Zeiträume, in diesem Raum verbleibt, wodurch sich dessen Temperatur an die jeweils vorherrschende Raumlufttemperatur anpasst.

Die mittlere Heizmediumübertemperatur und die logarithmische Übertemperatur des Heizkörpers werden wie folgt berechnet:

$$t_m = \frac{t_V + t_R}{2} = t_{OF} \tag{1}$$

$t_m$    mittlere Heizmediumtemperatur
$t_V$    Vorlauftemperatur des Heizkörpers
$t_R$    Rücklauftemperatur des Heizkörpers
$t_{OF}$    mittlere Oberflächentemperatur

$$\Delta t_m = t_m - t_L \tag{2}$$

$\Delta t_m$    mittlere Heizmediumübertemperatur
$t_L$    Raumlufttemperatur

$$\Delta t_{ln} = \frac{t_V - t_R}{\ln\left(\frac{t_v - t_L}{t_r - t_L}\right)} \tag{3}$$

$\Delta t_{ln}$    logarithmische Übertemperatur

Der c-Wert ist, insbesondere nach EN 834:2013 + AC:2015 (D) unter Punkt 3.22, ein Maß für den Grad der thermischen Ankopplung der Temperatursensoren des elektronischen Heizkostenverteilers an die zu erfassenden Temperaturen. Er ist insbesondere als Temperaturdifferenz-Verhältnis definiert. Die Berechnung des c-Wertes erfolgt auf folgende Weise:

$$c = 1 - \frac{\Delta t_S}{\Delta t} \tag{4}$$

Dabei ist

$\Delta t_S$    Temperaturdifferenz der Sensoren, zum Beispiel $t_{HS} - t_{RS}$
$\Delta t$    Heizmediumübertemperatur, wobei $\Delta t = \Delta t_m$ bzw. $\Delta t = \Delta t_{ln}$

Dabei ist

$t_{HS}$ Temperatur des heizkörperseitigen Sensors bzw. der heizkörperseitigen Sensoren

$t_{RS}$ Temperatur des raumseitigen Sensors (für Heizkostenverteiler ohne raumseitigen Sensor ist $t_{RS} = t_L$)

und der sich so ergebende c-Wert wird als $c_2$-Wert bezeichnet, wenn die Temperaturdifferenz beider Sensoren berücksichtigt wird. Wenn der elektronische Heizkostenverteiler keinen raumseitigen Sensor hat, wird der sich ergebende c-Wert als c1-Wert bezeichnet.

Der Kc-Wert ist, insbesondere nach EN 834:2013 + AC:2015 (D) unter Punkt 3.38, ein vom Algorithmus abhängiger Bewertungsfaktor für die thermische Ankopplung der Sensoren, insbesondere ein Faktor, welcher die unterschiedliche Ankopplung der Temperatur-Sensoren des elektronischen Heizkostenverteilers an die zu erfassenden Temperaturen bei unterschiedlichen Bauarten von Heizflächen berücksichtigt. Der Kc-Wert wird als Quotient aus der Basis-Anzeigegeschwindigkeit und der Anzeigegeschwindigkeit bei den Temperaturen der Sensoren des elektronischen Heizkostenverteilers am zu bewertenden Heizkörper im Basiszustand berechnet.

Für die Anzeigegeschwindigkeit gilt

$$R \sim P \sim \Delta t^n \tag{5}$$

$$R = K\, f(\Delta t) \tag{6}$$

R Anzeigegeschwindigkeit
P Heizkörperleistung
n Heizkörperexponent
K Konstante
$f(\Delta t)$ Algorithmus des Heizkostenverteilers

Für den Basiszustand gilt

$$R_B = K\, f(\Delta t) \tag{7}$$

$R_B$ Basisanzeigegeschwindigkeit
$\Delta t$ Heizmediumübertemperatur im Basiszustand

Für die Anzeigegeschwindigkeit $R_R$ bei den Temperaturen der Sensoren am zu bewertenden Heizkörper gilt

$$R_R = K\, f(\Delta t_S) \tag{8}$$

$R_R$ Anzeigegeschwindigkeit am zu bewertenden Heizkörper

Für den Kc-Wert ergibt sich nach oben aufgeführter Berechnungsvorschrift nach EN 834:2013 + AC:2015 (D) mit Gleichung (4) ganz allgemein

$$K_c = \frac{f(\Delta t)}{f((1-c)\Delta t)} \tag{9}$$

Für den Sonderfall

$$f(\Delta t) = \Delta t^n \tag{10}$$

lässt sich Gleichung (9) unter Verwendung von Gleichung (4) vereinfachen zu

$$K_c = \frac{\Delta t^n}{\Delta t_S{}^n} = \frac{1}{(1-c)^n} \tag{11}$$

Wird als Algorithmus ein Polynom verwendet, so kann der Kc-Wert nicht so einfach als Funktion des c-Wertes angegeben werden und kann nur numerisch ermittelt werden.

Es kann für jeden Temperatursensor des elektronischen Heizkostenverteilers ein c-Wert ermittelt werden. Ist der elektronische Heizkostenverteiler als ein Ein-Fühler-Gerät ausgebildet, gibt es somit nur einen c-Wert, bei einer Ausbildung des elektronischen Heizkostenverteilers als Mehrfühler-Gerät entsprechend mehrere c-Werte. Beispielsweise können bei einem Zwei-Fühler-Gerät für jede der Sensortemperaturen und für die Differenz der Sensortemperaturen jeweils ein c-Wert ermittelt werden, somit drei c-Werte.

Der elektronische Heizkostenverteiler besitzt und/oder benötigt so viele Kc-Werte, wie Algorithmen eingestellt werden können. Beispielsweise beinhaltet der elektronische Heizkostenverteiler acht Algorithmen und somit acht verschiedene Kc-Werte.

Der Ablauf des Ermittlungsverfahren, mindestens zur Ermittlung mindestens eines c-Wertes für den elektronischen Heizkostenverteiler, hat somit beispielsweise folgenden Ablauf:

- Montage des elektronischen Heizkostenverteilers am Heizkörper,
- Inbetriebnahme des Heizkörpers,
- Ermittlung, insbesondere Messung, der mittleren Oberflächentemperatur des Heizkörpers und/oder Ermittlung der Vorlauftemperatur und der Rücklauftemperatur am Heizkörper, wobei die Vorlauftemperatur durch Ermittlung, insbesondere Messung, der Oberflächentemperatur am Vorlauf des Heizkörpers ermittelt wird und die Rücklauftemperatur durch Ermittlung, insbesondere Messung, der Oberflächentemperatur am Rücklauf des Heizkörpers ermittelt wird,
- Ermittlung der, insbesondere mittleren, Raumlufttemperatur des Raumes, in welchem der Heizkörper angeordnet ist,
- Abfrage einer Sensortemperatur mindestens eines Temperatursensors des elektronischen Heizkostenverteilers,
- Berechnung der mittleren Heizmediumübertemperatur $\Delta t_m$ aus der mittleren Oberflächentemperatur $t_{OF}$ und der Raumlufttemperatur $t_L$ gemäß den Gleichungen (1) und (2), so dass gilt:

$$t_m = t_{OF} \tag{12}$$

$$\Delta t_m = t_m - t_L \tag{2}$$

und/oder aus der Vorlauftemperatur $t_V$, der Rücklauftemperatur $t_R$ und der Raumlufttemperatur $t_L$ gemäß den Gleichungen (1) und (2), so dass gilt:

$$t_m = \frac{t_V + t_R}{2} \tag{13}$$

$$\Delta t_m = t_m - t_L \tag{2}$$

und/oder Berechnung der logarithmischen Übertemperatur $\Delta t_{ln}$ des Heizkörpers (1) aus der Vorlauftemperatur $t_V$, der Rücklauftemperatur $t_R$ und der Raumlufttemperatur $t_L$ gemäß Gleichung (3), so dass gilt:

$$\Delta t_{ln} = \frac{t_V - t_R}{\ln\left(\frac{t_v - t_L}{t_r - t_L}\right)} \tag{3}$$

- Berechnung des mindestens einen c-Wertes gemäß der Gleichung (4), so dass bei Verwendung der vorher berechneten mittleren Heizmediumübertemperatur $\Delta t_m$ gilt:

$$c = 1 - \frac{\Delta t_S}{\Delta t_m} \tag{14}$$

und bei Verwendung der vorher berechneten logarithmischen Übertemperatur $\Delta t_{ln}$ gilt:

$$c = 1 - \frac{\Delta t_S}{\Delta t_{ln}} \qquad (15)$$

Optional kann dann zusätzlich vorgesehen sein:

- Abfrage des vom elektronischen Heizkostenverteiler verwendeten Algorithmus zur Berechnung des Zählfortschritts des elektronischen Heizkostenverteilers,
- Berechnung des mindestens einen Kc-Wertes. Wird auch die Berechnung des mindestens einen Kc-Wertes durchgeführt, dann ist es somit das Ermittlungsverfahren zur Ermittlung mindestens eines c-Wertes und mindestens eines Kc-Wertes für den elektronischen Heizkostenverteiler.

Die mittlere Oberflächentemperatur ist im Allgemeinen die Temperatur in einem mittleren Heizflächenbereich des Heizkörpers, insbesondere auf halber Breite und bei 75% der Höhe des Heizkörpers. Die Position der mittleren Oberflächentemperatur ist nicht fest vorgegeben. Sie hängt insbesondere von der Differenz von Vorlauf- und Rücklauftemperatur und von der Raumlufttemperatur ab. Da sich die Vorlauf- und Rücklauftemperaturen durch die Mediumtemperatur und den Massestrom und somit durch die Konstruktion des Heizkörpers einstellen, hängt die Position der mittleren Oberflächentemperatur von der Mediumtemperatur, dem Massestrom und von der Konstruktion des Heizkörpers sowie von der Raumlufttemperatur ab. Im Allgemeinen kann jedoch davon ausgegangen werden, dass bei 75% der Bauhöhe des Heizkörpers eine gute Näherung für die mittlere Oberflächentemperatur gemessen werden kann. In dieser relativen Höhe werden deshalb im Allgemeinen die Heizkostenverteiler am Heizkörper montiert.

Die Sensortemperatur des mindestens einen Temperatursensors des elektronischen Heizkostenverteilers ist die durch diesen Temperatursensor ermittelte Temperatur. Es kann beispielsweise auch jeweils eine Sensortemperatur mehrerer Temperatursensoren des Heizkostenverteilers abgefragt werden und/oder eine mittlere Sensortemperatur mehrerer Temperatursensoren des elektronischen Heizkostenverteilers berechnet und wie eine Sensortemperatur, insbesondere als Differenztemperatur, verwendet werden.

Die Abfrage der Sensortemperatur mindestens eines Temperatursensors des elektronischen Heizkostenverteilers betrifft beispielsweise die Sensortemperatur eines Heizkörpertemperatursensors und/oder, falls vorhanden, die Sensortemperatur eines Raumlufttemperatursensors des, insbesondere als Kompaktgerät ausgebildeten, elektronischen Heizkostenverteilers. Insbesondere bei einem elektronischen Heizkostenverteiler, welcher mit einer Vorlauftemperaturmessung und einer Rücklauftemperaturmessung arbeitet, betrifft die Abfrage der Sensortemperaturen des elektronischen Heizkostenverteilers mindestens die Sensortemperatur eines Vorlauftemperatursensors und die Sensortemperatur eines Rücklauftemperatursensors und optional die Sensortemperatur des Raumlufttemperatursensors eines solchen elektronischen Heizkostenverteilers.

Die erfindungsgemäße Lösung ist eine im Vergleich zum Stand der Technik einfach anzuwendende Alternative zur Ermittlung von c-Werten und/oder Kc-Werten insbesondere für ungebräuchliche und unbekannte Heizkörper, insbesondere in Exportmärkten, so dass eine möglichst genaue Ermittlung eines mit einer abgegebenen Wärmemenge des Heizkörpers korrespondierenden Wertes und somit eine möglichst genaue Heizkostenverteilung ermöglicht wird. Mit der erfindungsgemäßen Lösung ist es erstmals auch einfach möglich, für stark abweichende Arbeitspunkte des Heizkörpers korrekte c-Werte zu ermitteln. Dies ist bei den heute üblichen vergleichsweise niedrigen Mediumtemperaturen und den kleinen Durchflussmengen für eine genaue Verteilung durchaus von Bedeutung. Mit der erfindungsgemäßen Lösung ist es des Weiteren erstmals möglich, individuelle Unterschiede der einzelnen Heizkörper und der Heizkostenverteiler, abweichende Anschlusskonfigurationen, im Labor wird im allgemeinen nur eine gemessen, und Alterungseffekte sowie verminderte Querschnitte zu berücksichtigen. Mittels der erfindungsgemäßen Lösung ist es beispielsweise auch möglich, die c-Werte und/oder Kc-Werte von im Feld, d. h. bei an einem Heizkörper bei einem jeweiligen Kunden, verbliebenen Montageplatten für elektronische Heizkostenverteiler anderer Hersteller in Verbindung mit einer mechanisch kompatiblen Heizkostenverteiler-Elektronikbaugruppe (Plattformkonzept) zu ermitteln und somit diese Montageplatten weiterhin zu verwenden. Dies ist mittels aus dem Stand der Technik bekannter Verfahren nicht möglich, da diese Verfahren die Nutzung im Feld verbliebener Montageplatten von Fremdherstellern an Heizkörpern durch mechanisch kompatible Heizkostenverteiler-Elektronikbaugruppen nicht unterstützen.

Aus dem Stand der Technik sind zur Ermittlung von c-Werten und Kc-Werten insbesondere sehr aufwändige Laborverfahren bekannt, welche nicht im Feld, d. h. an einem jeweiligen bei einem Kunden montierten Heizkörper, einsetzbar sind. Dies, d. h. der Einsatz im Feld, d. h. an einem jeweiligen bei einem Kunden montierten Heizkörper, wird durch die erfindungsgemäße Lösung ermöglicht.

Andere aus dem Stand der Technik bekannte Verfahren, welche theoretisch im Feld einsetzbar wären, sind sehr aufwändig, da sie beispielsweise ein Stellglied, das auf ein Thermostatventil des Heizkörpers einwirkt, um einen bestimmten Massenstrom des Heizmittels einzustellen, und einen Rechner mit einer daran angeschlossenen Messbox zum Ansteuern des Stellgliedes erfordern. Die erfindungsgemäße Lösung erfordert im Vergleich dazu einen wesentlich geringeren Aufwand.

Andere aus dem Stand der Technik bekannte Methoden, bei welchen die c-Werte und Kc-Werte durch Ähnlichkeitsannahmen geschätzt werden, sind relativ unsicher, da trotz äußerlicher Ähnlichkeit ein innerer Aufbau der Heizkörper sehr unterschiedlich sein kann. Diese Unsicherheiten bei der Ermittlung des c-Wertes und/oder Kc-Wertes werden durch die erfindungsgemäße Lösung vermieden.

Die Labormessungen sind nicht dazu geeignet, individuelle Veränderungen, insbesondere bei älteren Heizkörpern, bei der c-Wert-Ermittlung und Kc-Wert-Ermittlung zu berücksichtigen. Durch die erfindungsgemäße Lösung wird dies ermöglicht. Zudem sind Labormessungen in Märkten ohne Zulassungslaboratorien für Heizkostenverteiler in Bezug auf die lokal vorhandenen Heizkörper kaum realisierbar. Mittels der erfindungsgemäßen Lösung wird auch bei diesen Heizkörpern die Ermittlung des mindestens einen c-Wertes und/oder Kc-Wertes ermöglicht.

Bei der Ermittlung der c-Werte und/oder Kc-Werte im Labor wird im Allgemeinen nur eine Anschlussvariante eines Heizkörpers gemessen. Im Feld kann ein Heizkörper im Allgemeinen auch in vielen abweichenden Anschlussvarianten betrieben werden. Durch das erfindungsgemäße Verfahren können auch die c-Werte und/oder Kc-Werte für solche abweichenden Anschlussvarianten ermittelt werden.

Da es sich bei der Heizkostenverteilung nicht um eine exakte Energiemessung, sondern um ein Vergleichsverfahren handelt, sind auch die zu erwartenden Abweichungen der ermittelten c-Werte und/oder Kc-Werte mit dem vorgeschlagenen Verfahren von den Laborwerten dann ohne Einfluss auf die Verteilgenauigkeit, wenn die c-Werte und/oder Kc-Werte aller verschiedenen Heizkörper einer Liegenschaft an einem Arbeitspunkt und mit einer Vorrichtung zur Durchführung mindestens des Ermittlungsverfahrens ermittelt werden, weil man davon ausgehen kann, dass alle relativen Abweichungen gleich groß sind. Dies entspricht der Forderung gemäß Punkt 7.5 der EN 834:2013 + AC:2015 (D) nach Einheitlichkeit des Bewertungssystems der Heizkostenverteiler innerhalb einer Abrechnungseinheit.

Die mittlere Oberflächentemperatur und/oder die Vorlauftemperatur und/oder die Rücklauftemperatur wird/werden vorteilhafterweise mit einem Thermometer, insbesondere mit einem Infrarotthermometer oder mit einem Oberflächenthermometer, insbesondere der Vorrichtung zur Durchführung mindestens des Ermittlungsverfahrens und vorteilhafterweise auch des Parametrierverfahrens, ermittelt, insbesondere gemessen. Dabei kann dasselbe Thermometer zur Ermittlung der Oberflächentemperatur und/oder der Vorlauftemperatur und/oder der Rücklauftemperatur vorgesehen sein oder es können eine oder mehrere dieser Temperaturen ein eigenes Thermometer vorgesehen sein. Die Vorlauftemperatur wird dabei durch Ermittlung, insbesondere Messung, der Oberflächentemperatur am Vorlauf des Heizkörpers ermittelt und die Rücklauftemperatur wird durch Ermittlung, insbesondere Messung, der Oberflächentemperatur am Rücklauf des Heizkörpers ermittelt.

Die mittlere Oberflächentemperatur wird insbesondere mit einem Thermometer ermittelt, insbesondere gemessen, beispielsweise mit einem Infrarotthermometer oder mit einem Oberflächenthermometer, insbesondere indem eine Heizkörperoberflächentemperatur unmittelbar neben der vertikalen Mitte der Montageplatte des elektronischen Heizkostenverteilers gemessen wird. Mit der mittleren Oberflächentemperatur und der Raumlufttemperatur wird dann in einer möglichen Ausführungsform, insbesondere durch eine Kalkulationseinrichtung, die für die c-Wert Berechnung benötigte mittlere Heizmediumübertemperatur berechnet.

Alternativ oder zusätzlich wird die mittlere Heizmediumübertemperatur mit dem Thermometer, beispielsweise mit einem Infrarotthermometer, ermittelt, indem mit diesem Thermometer zum Beispiel die Oberflächentemperaturen der Heizkörperanschlüsse und somit die Vorlauftemperatur und die Rücklauftemperatur, sowie die Raumlufttemperatur zum Beispiel an einem Möbel im Raum gemessen werden und die mittlere Heizkörperübertemperatur aus diesen Werten, beispielsweise nach der bekannten Beziehung für die logarithmische Übertemperatur, insbesondere mit einer Kalkulationseinrichtung der Vorrichtung zur Durchführung mindestens des Ermittlungsverfahrens berechnet wird.

Ein Parametrierverfahren zur Parametrierung des elektronischen Heizkostenverteilers, umfasst folgende Verfahrensschritte:

- Montage des elektronischen Heizkostenverteilers an einem Heizkörper,
- Inbetriebnahme des Heizkörpers,
- Ermittlung, insbesondere Messung, einer mittleren Oberflächentemperatur des Heizkörpers und/oder Ermittlung einer Vorlauftemperatur und einer Rücklauftemperatur am Heizkörper, wobei die Vorlauftemperatur durch Ermittlung, insbesondere Messung, einer Oberflächentemperatur an einem Vorlauf des Heizkörpers, insbesondere an einem Vorlaufanschluss des Heizkörpers, ermittelt wird und die Rücklauftemperatur durch Ermittlung, insbesondere Messung, einer Oberflächentemperatur an einem Rücklauf des Heizkörpers, insbesondere an einem Rücklaufanschluss des Heizkörpers, ermittelt wird,

- Ermittlung, insbesondere Messung, einer, insbesondere mittleren, Raumlufttemperatur eines Raumes, in welchem der Heizkörper angeordnet ist,

- Abfrage einer Sensortemperatur mindestens eines Temperatursensors des elektronischen Heizkostenverteilers,
- Berechnung des mindestens einen c-Wertes,
- optional Abfrage eines vom elektronischen Heizkostenverteiler verwendeten Algorithmus, insbesondere eines Algorithmus zur Berechnung eines Zählfortschritts des elektronischen Heizkostenverteilers, und Berechnung des mindestens einen Kc-Wertes, und Übertragen des mindestens einen berechneten c-Wertes und/oder des mindestens einen berechneten Kc-Wertes, wenn dieser berechnet wurde, zum elektronischen Heizkostenverteiler.

Das Parametrierverfahren umfasst somit die Verfahrensschritte des oben genannten erfindungsgemäßen Ermittlungsverfahrens und zusätzlich den Verfahrensschritt des Übertragens des mindestens einen berechneten c-Wertes und/oder des mindestens einen berechneten Kc-Wertes zum elektronischen Heizkostenverteiler. Insbesondere gelten zweckmäßigerweise die oben angegebenen Formeln auch für das Parametrierverfahren.

Zur Berechnung des mindestens einen c-Wertes wird zweckmäßigerweise

- eine mittlere Heizmediumübertemperatur aus der mittleren Oberflächentemperatur und der Raumlufttemperatur und/oder aus der Vorlauftemperatur, der Rücklauftemperatur und der Raumlufttemperatur berechnet, und/oder
- eine logarithmische Übertemperatur des Heizkörpers aus der Vorlauftemperatur, der Rücklauftemperatur und der Raumlufttemperatur berechnet.

Das Parametrierverfahren wird insbesondere mit einer im Folgenden näher beschriebenen Vorrichtung zur Durchführung des Parametrierverfahrens durchgeführt.

Die mittlere Oberflächentemperatur und/oder die Vorlauftemperatur und/oder die Rücklauftemperatur wird/werden vorteilhafterweise mit einem Thermometer, insbesondere mit einem Infrarotthermometer oder mit einem Oberflächenthermometer, insbesondere der Vorrichtung zur Durchführung mindestens des Ermittlungsverfahrens und vorteilhafterweise auch des Parametrierverfahrens, ermittelt, insbesondere gemessen. Dabei kann dasselbe Thermometer zur Ermittlung der Oberflächentemperatur und/oder der Vorlauftemperatur und/oder der Rücklauftemperatur vorgesehen sein oder es können eine oder mehrere dieser Temperaturen ein eigenes Thermometer vorgesehen sein. Die Vorlauftemperatur wird dabei durch Ermittlung, insbesondere Messung, der Oberflächentemperatur am Vorlauf des Heizkörpers ermittelt und die Rücklauftemperatur wird durch Ermittlung, insbesondere Messung, der Oberflächentemperatur am Rücklauf des Heizkörpers ermittelt.

Unter Inbetriebnahme des Heizkörpers ist insbesondere zu verstehen, dass der Heizkörper von einer, insbesondere mittels eines Heizkessels, geheizten Temperierflüssigkeit, insbesondere Wasser, durchströmt wird und an einem vorgesehenen Arbeitspunkt, insbesondere bezüglich Vorlauftemperatur und Massestrom bzw. Betriebsdruck, einer Heizungsanlage betrieben wird. Hierzu sind oder werden ein Vorlauf und ein Rücklauf des Heizkörpers geöffnet.

Die oben erwähnten Temperaturen, d. h. die mittlere Oberflächentemperatur, die Vorlauftemperatur, die Rücklauftemperatur und/oder die Raumlufttemperatur, werden jeweils vorteilhafterweise nicht mit den Temperatursensoren des elektronischen Heizkostenverteilers, sondern mit mindestens einem externen Thermometer und/oder mit mindestens einem externen Temperatursensor, insbesondere mit mindestens einem Thermometer und/oder mit mindestens einem, insbesondere vorrichtungsinternen, Temperatursensor einer Vorrichtung zur Durchführung mindestens des Ermittlungsverfahrens, ermittelt. Bezüglich der Vorlauftemperatur wird vorteilhafterweise die Oberflächentemperatur am Vorlauf des Heizkörpers ermittelt, insbesondere gemessen, und als Vorlauftemperatur verwendet. Bezüglich der Rücklauftemperatur wird vorteilhafterweise die Oberflächentemperatur am Rücklauf des Heizkörpers ermittelt, insbesondere gemessen, und als Rücklauftemperatur verwendet.

Die mittlere Oberflächentemperatur und/oder die Vorlauftemperatur und/oder die Rücklauftemperatur werden jeweils insbesondere von außen ermittelt, insbesondere gemessen, d. h. die mittlere Oberflächentemperatur an einer, insbesondere dem Raum zugewandten, Außenoberfläche des Heizkörpers und/oder die Vorlauftemperatur als Oberflächentemperatur an einer, insbesondere dem Raum zugewandten, Außenoberfläche des Vorlaufs des Heizkörpers, insbesondere des Vorlaufanschlusses des Heizkörpers, und/oder die Rücklauftemperatur als Oberflächentemperatur an einer, insbesondere dem Raum zugewandten, Außenoberfläche des Rücklaufs des Heizkörpers, insbesondere des Rücklaufanschlusses des Heizkörpers. Insbesondere werden die mittlere Oberflächentemperatur und/oder die Vorlauftemperatur und/oder die Rücklauftemperatur jeweils nicht mittels Sensoren und/oder Thermometern im Inneren des Heizkörpers und/oder des Vorlaufs und/oder des Rücklaufs gemessen, d. h. insbesondere nicht mittels Sensoren und/oder Thermometern, die von der Temperierflüssigkeit des Heizkörpers beispielsweise direkt oder über eine Tauchhülse umgeben und/oder umströmt sind, sondern über eine jeweilige Außenoberfläche.

Die mittlere Raumlufttemperatur wird beispielsweise durch Ermittlung, insbesondere Messung, der Luft des Raums ermittelt, beispielsweise indem das Thermometer und/oder der Temperatursensor von dieser Luft des Raums umgeben und/oder umströmt und somit mit dieser thermisch gekoppelt ist. Alternativ oder zusätzlich kann die mittlere Raumlufttemperatur beispielsweise ermittelt werden, indem eine Temperatur einer Oberfläche eines sich im Raum befindlichen Gegenstandes, welcher der Raumluft und somit deren Raumlufttemperatur ausgesetzt ist und sich somit daran angepasst hat, ermittelt, insbesondere gemessen, wird. Hierfür wird ein Gegenstand gewählt, dessen Temperatur ausschließlich oder zumindest überwiegend, insbesondere zumindest im Wesentlichen, von der ihn umgebenden Raumluft beeinflusst wird und insbesondere selbst nicht durch von der Raumluft abweichende Einflüsse geheizt oder gekühlt wird, d. h. insbesondere keine Komponenten aufweist, die durch eine, insbesondere von der Raumluft unabhängige, Energiezufuhr, insbesondere eine elektrische Energiezufuhr, geheizt oder gekühlt werden oder sich aufheizen oder abkühlen. Als ein solcher Gegenstand, an dessen Oberfläche die Temperatur gemessen und als Raumlufttemperatur verwendet werden kann, eignet sich insbesondere ein Möbel, d. h. ein Möbelstück, welches dem Raum zugeordnet ist und daher üblicherweise, d. h. insbesondere über längere Zeiträume, in diesem Raum verbleibt, wodurch sich dessen Temperatur an die jeweils vorherrschende Raumlufttemperatur anpasst.

Die Berechnung und Übermittlung des mindestens einen Kc-Wertes erfolgt beispielsweise in Abhängigkeit vom im elektronischen Heizkostenverteiler verwendeten Algorithmus, insbesondere des Algorithmus zur Berechnung des Zählfortschritts des elektronischen Heizkostenverteilers. Üblicherweise wird der mindestens eine Kc-Wert berechnet und übertragen. Es ist jedoch auch möglich, dass der elektronische Heizkostenverteiler den Kc-Wert selbst berechnen kann. In diesem Fall ist vorteilhafterweise vorgesehen, dass nur der mindestens eine c-Wert berechnet und übertragen wird oder dass beispielsweise zusätzlich auch der mindestens eine Kc-Wert berechnet, aber nicht übertragen wird.

Durch das Parametrierverfahren werden die oben bereits genannten Vorteile des erfindungsgemäßen Ermittlungsverfahrens erreicht und der Heizkostenverteiler wird entsprechend parametriert, so dass eine möglichst genaue Ermittlung des mit der abgegebenen Wärmemenge des Heizkörpers korrespondierenden Wertes und somit eine möglichst genaue Heizkostenverteilung ermöglicht wird.

In einer möglichen Ausführungsform wird zudem aus einem Heizkörperdatenspeicher des Heizkörpers mindestens ein Heizkörperparameter des Heizkörpers, insbesondere eine Nennleistung des Heizkörpers, ausgelesen und zum elektronischen Heizkostenverteiler übertragen. Dies ermöglicht die Verwendung des mindestens einen ausgelesenen Heizkörperparameters, beispielsweise der Nennleistung, und/oder eines oder mehrerer anderer ausgelesener Heizkörperparameter zur vollständigen Parametrierung des elektronischen Heizkostenverteilers.

Eine erfindungsgemäße Vorrichtung zur Durchführung mindestens des Ermittlungsverfahrens, vorteilhafterweise auch des Parametrierverfahrens, d. h. welche zur Durchführung mindestens des Ermittlungsverfahrens, vorteilhafterweise auch des Parametrierverfahrens, ausgebildet und eingerichtet ist, umfasst:

- ein Thermometer zur Ermittlung, insbesondere Messung, der mittleren Oberflächentemperatur des Heizkörpers (1) und/oder der Vorlauftemperatur und/oder der Rücklauftemperatur am Heizkörper, wobei die Vorlauftemperatur durch Ermittlung, insbesondere Messung, der Oberflächentemperatur am Vorlauf des Heizkörpers, insbesondere am Vorlaufanschluss des Heizkörpers, ermittelbar ist und die Rücklauftemperatur durch Ermittlung, insbesondere Messung, der Oberflächentemperatur am Rücklauf des Heizkörpers, insbesondere am Rücklaufanschluss des Heizkörpers, ermittelbar ist,
- ein Thermometer oder einen, insbesondere internen, d. h. vorrichtungsinternen, Temperatursensor zur Ermittlung, insbesondere Messung, der, insbesondere mittleren, Raumlufttemperatur,
- eine Abfragekommunikationseinrichtung zur Abfrage der Sensortemperatur des mindestens einen Temperatursensors des elektronischen Heizkostenverteilers,
- mindestens eine Kalkulationseinrichtung,
- optional eine Abfragekommunikationseinrichtung zur Abfrage des Algorithmus des elektronischen Heizkostenverteilers.

Die mindestens eine Kalkulationseinrichtung ist insbesondere zur Berechnung des mindestens einen c-Wertes und/oder zur Berechnung der mittleren Heizmediumübertemperatur und/oder zur Berechnung der logarithmischen Übertemperatur und/oder zur Berechnung des mindestens einen Kc-Wertes vorgesehen, insbesondere dazu ausgebildet und eingerichtet.

Die erfindungsgemäße Vorrichtung ermöglicht auf einfache und kostengünstige Weise die Durchführung des oben beschriebenen Ermittlungsverfahrens und somit eine möglichst genaue Ermittlung des mindestens einen c-Wertes und/oder Kc-Wertes, und vorteilhafterweise zudem die Durchführung des oben beschriebenen Parametrierverfahrens und somit die Parametrierung des elektronischen Heizkostenverteilers.

Die mittlere Oberflächentemperatur und/oder die Vorlauftemperatur und/oder die Rücklauftemperatur sind mittels der Vorrichtung jeweils insbesondere von außen ermittelbar, insbesondere messbar, d. h. die mittlere Oberflächentemperatur an einer, insbesondere dem Raum zugewandten, Außenoberfläche des Heizkörpers und/oder die Vorlauftemperatur als Oberflächentemperatur an einer, insbesondere dem Raum zugewandten, Außenoberfläche des Vorlaufs des Heizkörpers, insbesondere des Vorlaufanschlusses des Heizkörpers, und/oder die Rücklauftemperatur als Oberflächentemperatur an einer, insbesondere dem Raum zugewandten, Außenoberfläche des Rücklaufs des Heizkörpers, insbesondere des Rücklaufanschlusses des Heizkörpers. Insbesondere werden die mittlere Oberflächentemperatur und/oder die Vorlauftemperatur und/oder die Rücklauftemperatur jeweils nicht mittels Sensoren und/oder Thermometern im Inneren des Heizkörpers und/oder des Vorlaufs und/oder des Rücklaufs gemessen, d. h. insbesondere nicht mittels Sensoren und/oder Thermometern, die von der Temperierflüssigkeit des Heizkörpers beispielsweise direkt oder über eine Tauchhülse umgeben und/oder umströmt sind, sondern über eine jeweilige Außenoberfläche.

Das Thermometer zur Ermittlung der mittleren Oberflächentemperatur des Heizkörpers und/oder der Vorlauftemperatur und/oder der Rücklauftemperatur und das Thermometer zur Ermittlung der Raumlufttemperatur können identisch sein, d. h. als ein gemeinsames Thermometer ausgebildet sein, so dass die Vorrichtung nur ein Thermometer zur Ermittlung dieser Werte aufweist, für welche es identisch ist.

In einer möglichen Ausführungsform umfasst die Vorrichtung zusätzlich eine Leseeinrichtung zur Auslesung eines, insbesondere am Heizkörper angeordneten, beispielsweise als Heizkörperetikett ausgebildeten, Heizkörperdatenspeichers, in welchem zumindest ein Heizkörperparameter, insbesondere eine Nennleistung, des Heizkörpers gespeichert ist. Die Leseeinrichtung ermöglicht das Auslesen des Heizkörperdatenspeichers, d. h. des mindestens einen Heizkörperparameters, insbesondere der Nennleistung des Heizkörpers, aus dem Heizkörperdatenspeicher und die Verwendung des mindestens einen ausgelesenen Heizkörperparameters, beispielsweise der Nennleistung, und/oder eines oder mehrerer anderer ausgelesener Heizkörperparameter zur vollständigen Parametrierung des elektronischen Heizkostenverteilers.

Der Heizkörperdatenspeicher ist beispielsweise als ein optoelektronisch auslesbarer Datenspeicher ausgebildet. Der mindestens eine Heizkörperparameter, insbesondere die Nennleistung, ist darauf als ein optoelektronisch lesbarer Code gespeichert, insbesondere als eine optoelektronisch lesbare Schrift, insbesondere als ein eindimensionaler oder zweidimensionaler Code, insbesondere als ein Strichcode, auch als Barcode, Balkencode oder Streifencode bezeichnet, oder als ein QR-Code. Die Leseeinrichtung ist dann entsprechend als eine optoelektronische Leseeinrichtung ausgebildet, beispielsweise umfassend einen CCD-Scanner, einen Laserscanner und/oder eine Kamera.

Alternativ zum optoelektronisch auslesbaren Datenspeicher kann der Heizkörperdatenspeicher beispielsweise auch als ein RFID-Tag oder NFC-Tag ausgebildet sein, d. h. als ein mittels RFID oder NFC auslesbarer Heizkörperdatenspeicher. Die Auslesung des mindestens einen gespeicherten Heizkörperparameters erfolgt dann nicht optoelektronisch, sondern die Leseeinrichtung ist dann als eine RFID-Leseeinrichtug oder NFC-Leseeinrichtung ausgebildet. Die Speicherung des mindestens einen Heizkörperparameters im Heizkörperdatenspeicher erfolgt dann entsprechend nicht in grafischer, d. h. optoelektronisch auslesbarer, sondern in elektronischer Form.

Vorteilhafterweise umfasst die Vorrichtung zudem eine Übertragungskommunikationseinrichtung zur Übertragung des mindestens einen berechneten c-Wertes und/oder des mindestens einen berechneten Kc-Wertes und/oder des mindestens einen aus dem Heizkörperdatenspeicher ausgelesenen Heizkörperparameters zum elektronischen Heizkostenverteiler. Dadurch ermöglicht die Vorrichtung zudem die Durchführung des oben beschriebenen Parametrierverfahrens und somit auf einfache und kostengünstige Weise eine möglichst genaue Parametrierung des Heizkostenverteilers bezüglich des Heizkörpers, an welchem er montiert ist.

Die Abfragekommunikationseinrichtung zur Abfrage der Sensortemperatur des mindestens einen Temperatursensors des elektronischen Heizkostenverteilers, die Abfragekommunikationseinrichtung zur Abfrage des Algorithmus des elektronischen Heizkostenverteilers und die Übertragungskommunikationseinrichtung sind beispielsweise identisch, d. h. die Vorrichtung weist eine gemeinsame Kommunikationseinrichtung zur Abfrage der Sensortemperatur des mindestens einen Temperatursensors des elektronischen Heizkostenverteilers und zur Abfrage des Algorithmus des elektronischen Heizkostenverteilers sowie zur Übertragung des mindestens einen berechneten c-Wertes und/oder des mindestens einen berechneten Kc-Wertes zum elektronischen Heizkostenverteiler auf. Dadurch sind nicht mehrere Kommunikationseinrichtungen erforderlich, wodurch eine Komplexität, eine Größe und Kosten der Vorrichtung reduziert werden.

Alternativ können beispielsweise eine Abfragekommunikationseinrichtung zur Abfrage der Sensortemperatur des mindestens einen Temperatursensors des elektronischen Heizkostenverteilers und zur Abfrage des Algorithmus des elektronischen Heizkostenverteilers und zusätzlich die Übertragungskommunikationseinrichtung vorgesehen sein.

Es kann vorgesehen sein, dass die Vorrichtung eine gemeinsame Kalkulationseinrichtung zur Berechnung mindestens zweier der oben genannten Größen, d. h. zur Berechnung des mindestens einen c-Wertes und/oder zur Berechnung der mittleren Heizmediumübertemperatur und/oder zur Berechnung der logarithmischen Übertemperatur und/oder zur Berechnung des mindestens einen Kc-Wertes aufweist, so dass nicht mehrere Kalkulationseinrichtungen erforderlich sind, wodurch eine Komplexität, eine Größe und Kosten der Vorrichtung reduziert werden. In anderen Ausführungsformen der Vorrichtung kann diese jedoch auch mehrere Kalkulationseinrichtungen aufweisen, beispielsweise für jede der oben genannten zu kalkulierenden Größen eine eigene Kalkulationseinrichtung oder für mehrere der oben genannten zu kalkulierenden Größen eine gemeinsame Kalkulationseinrichtung.

Die Vorrichtung ist vorteilhafterweise ausgebildet als eine Infrarotthermometervorrichtung. Diese umfasst bereits ein Infrarotthermometer, d. h. insbesondere einen Infrarottemperatursensor, welches bzw. welcher als Thermometer verwendet werden kann, beispielsweise zur Ermittlung der mittleren Heizkörpertemperatur und/oder der Vorlauftemperatur und/oder der Rücklauftemperatur und/oder der Raumlufttemperatur.

Das Thermometer ist somit beispielsweise als ein Infrarotthermometer ausgebildet. In einer anderen Ausführungsform der Vorrichtung kann das Thermometer beispielsweise als ein, insbesondere tastendes, Oberflächenthermometer ausgebildet sein.

Die Abfragekommunikationseinrichtung und/oder die Übertragungskommunikationseinrichtung oder die gemeinsame Kommunikationseinrichtung sind/ist beispielsweise als eine Infrarotschnittstelle oder als eine Funkschnittstelle ausgebildet, beispielsweise als eine Bluetoothschnittstelle, NFC-Schnittstelle oder als eine andere Funkschnittstelle. Insbesondere sind/ist die Abfragekommunikationseinrichtung und/oder die Übertragungskommunikationseinrichtung oder die gemeinsame Kommunikationseinrichtung korrespondierend zu einer Kommunikationsschnittstelle des elektronischen Heizkostenverteilers ausgebildet, um die Kommunikation zwischen dem elektronischen Heizkostenverteiler und der Vorrichtung zu ermöglichen.

Insbesondere sind/ist somit die Abfragekommunikationseinrichtung zur Abfrage der Sensortemperatur des mindestens einen Temperatursensors des elektronischen Heizkostenverteilers und/oder die Abfragekommunikationseinrichtung zur Abfrage des Algorithmus des elektronischen Heizkostenverteilers und/oder die Abfragekommunikationseinrichtung zur Abfrage der Sensortemperatur des mindestens einen Temperatursensors des elektronischen Heizkostenverteilers und zur Abfrage des Algorithmus des elektronischen Heizkostenverteilers und/oder die Übertragungskommunikationseinrichtung beispielsweise, insbesondere jeweils, als eine Infrarotschnittstelle oder als eine Funkschnittstelle ausgebildet, beispielsweise als eine Bluetoothschnittstelle, NFC-Schnittstelle oder als eine andere Funkschnittstelle. Beispielsweise ist alternativ die gemeinsame Kommunikationseinrichtung als eine Infrarotschnittstelle oder als eine Funkschnittstelle ausgebildet, beispielsweise als eine Bluetoothschnittstelle, NFC-Schnittstelle oder als eine andere Funkschnittstelle.

Insbesondere sind/ist somit die Abfragekommunikationseinrichtung zur Abfrage der Sensortemperatur des mindestens einen Temperatursensors des elektronischen Heizkostenverteilers und/oder die Abfragekommunikationseinrichtung zur Abfrage des Algorithmus des elektronischen Heizkostenverteilers und/oder die Abfragekommunikationseinrichtung zur Abfrage der Sensortemperatur des mindestens einen Temperatursensors des elektronischen Heizkostenverteilers und zur Abfrage des Algorithmus des elektronischen Heizkostenverteilers und/oder die Übertragungskommunikationseinrichtung, insbesondere jeweils, korrespondierend zur Kommunikationsschnittstelle des elektronischen Heizkostenverteilers ausgebildet, um die Kommunikation zwischen dem elektronischen Heizkostenverteiler und der Vorrichtung zu ermöglichen. Beispielsweise ist alternativ die gemeinsame Kommunikationseinrichtung korrespondierend zur Kommunikationsschnittstelle des elektronischen Heizkostenverteilers ausgebildet, um die Kommunikation zwischen dem elektronischen Heizkostenverteiler und der Vorrichtung zu ermöglichen.

Ausführungsbeispiele der Erfindung werden im Folgenden anhand von Zeichnungen näher erläutert.

Darin zeigen:

Figur 1    schematisch einen Heizkörper und einen daran zu montierenden elektronischen Heizkostenverteiler, und

Figur 2    schematisch eine Vorrichtung zur Durchführung eines Ermittlungsverfahrens, mindestens zur Ermittlung mindestens eines c-Wertes für einen elektronischen Heizkostenverteiler und vorteilhafterweise zur Durchführung eines Parametrierverfahren zur Parametrierung des elektronischen Heizkostenverteilers.

Einander entsprechende Teile sind in allen Figuren mit den gleichen Bezugzeichen versehen.

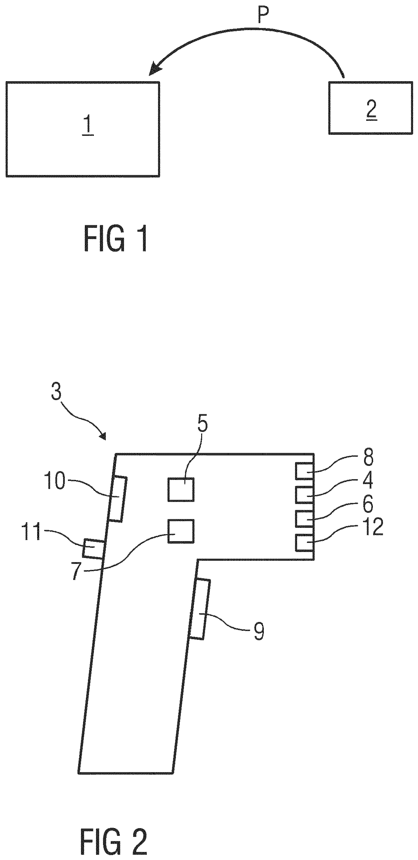

**Figur 1** zeigt schematisch einen Heizkörper 1 und einen daran zu montierenden Heizkostenverteiler 2. **Figur 2** zeigt eine schematische Darstellung einer Vorrichtung 3 zur Durchführung eines Ermittlungsverfahrens, mindestens zur Ermittlung mindestens eines c-Wertes für den elektronischen Heizkostenverteiler 2 und zur Durchführung eines Parametrierverfahren zur Parametrierung des elektronischen Heizkostenverteilers 2.

In dem Ermittlungsverfahren, mindestens zur Ermittlung des mindestens einen c-Wertes für den elektronischen Heizkostenverteiler 2, wird der elektronische Heizkostenverteiler 2 am Heizkörper 1 montiert, wie in **Figur 1** durch einen Pfeil P schematisch angedeutet, und der Heizkörper 1 wird in Betrieb genommen, d. h. er wird von einer, insbesondere mittels eines Heizkessels, geheizten Temperierflüssigkeit, insbesondere Wasser, durchströmt. Hierzu sind oder werden ein Vorlauf und ein Rücklauf des Heizkörpers 1 geöffnet.

Es werden nun mittels der Vorrichtung 3 eine mittlere Oberflächentemperatur des Heizkörpers 1 und eine Raumlufttemperatur eines Raumes, in welchem der Heizkörper 1 angeordnet ist, ermittelt, eine mittlere Heizmediumübertemperatur berechnet, insbesondere mittels einer entsprechenden Kalkulationseinrichtung 7, eine Sensortemperatur mindestens eines Temperatursensors oder jeweils eine Sensortemperatur mehrerer Temperatursensoren des elektronischen Heizkostenverteilers 2 abgefragt und ein vom elektronischen Heizkostenverteiler 2 verwendeter Algorithmus, insbesondere ein Algorithmus zur Berechnung eines Zählfortschritts des elektronischen Heizkostenverteilers, abgefragt. Anschließend werden mittels dieser Größen der mindestens eine c-Wert und beispielsweise auch mindestens ein Kc-Wert oder mehrere c-Werte und beispielsweise auch mehrere Kc-Werte berechnet. Wird auch die Berechnung des mindestens einen Kc-Wertes durchgeführt, dann ist es somit ein Ermittlungsverfahren zur Ermittlung mindestens eines c-Wertes und mindestens eines Kc-Wertes für einen elektronischen Heizkostenverteiler 2.

Im Parametrierverfahren zur Parametrierung des elektronischen Heizkostenverteilers 2 werden zusätzlich der mindestens eine berechnete c-Wert und/oder der mindestens eine berechnete Kc-Wert oder die mehreren berechneten c-Werte und/oder Kc-Werte zum elektronischen Heizkostenverteiler 2 übertragen.

Die Vorrichtung 3 zur Durchführung des Ermittlungsverfahrens und vorteilhafterweise zudem zur Durchführung des Parametrierverfahrens umfasst ein Thermometer 4 zur Ermittlung der mittleren Oberflächentemperatur des Heizkörpers 1, welches im dargestellten Beispiel als ein Infrarotthermometer ausgebildet ist und einen Infrarottemperatursensor umfasst. Die Vorrichtung 3 ist im dargestellten Beispiel als eine Infrarotthermometervorrichtung ausgebildet, welche dieses Infrarotthermometer und somit den Infrarotsensor umfasst.

Die mittlere Oberflächentemperatur des Heizkörpers 1 wird mit diesem beispielsweise als Infrarotthermometer ausgebildeten Thermometer 4 ermittelt. Alternativ kann das Thermometer 4 zur Ermittlung der mittleren Oberflächentemperatur des Heizkörpers 1 beispielsweise als ein Oberflächenthermometer ausgebildet sein. Die mittlere Oberflächentemperatur des Heizkörpers 1 wird als eine Heizkörperoberflächentemperatur ermittelt, welche vorteilhafterweise unmittelbar neben der vertikalen Mitte einer Montageplatte des elektronischen Heizkostenverteilers 2 am Heizkörper 1 gemessen wird.

Alternativ wird eine logarithmische Übertemperatur des Heizkörpers 1 ermittelt, indem mit dem Thermometer 4, beispielsweise mit dem Infrarotthermometer, eine Oberflächentemperatur von Heizkörperanschlüssen, d. h. eine Oberflächentemperatur eines Vorlaufanschlusses und eine Oberflächentemperatur eines Rücklaufanschlusses des Heizkörpers 1 und somit eine Vorlauf- und eine Rücklauftemperatur, gemessen werden sowie die Raumlufttemperatur zum Beispiel an einem Gegenstand, zum Beispiel einem Möbel, im Raum oder auf andere Weise gemessen wird und die logarithmische Übertemperatur des Heizkörpers 1 aus diesen Werten nach der bekannten Beziehung für eine logarithmische Übertemperatur und der gemessenen Raumlufttemperatur mit der Kalkulationseinrichtung 7 der Vorrichtung 3 berechnet wird.

Die Vorrichtung 3 umfasst im dargestellten Beispiel des Weiteren einen vorrichtungsinternen Temperatursensor 5 zur, insbesondere alternativen, Ermittlung einer Raumlufttemperatur eines Raums, in welchem der Heizkörper 1 angeordnet ist, eine insbesondere als Infrarotschnittstelle ausgebildete Abfragekommunikationseinrichtung zur Abfrage der Sensortemperatur des mindestens einen Temperatursensors des elektronischen Heizkostenverteilers 2 und zur Abfrage des Algorithmus des elektronischen Heizkostenverteilers 2, eine c-Wert-Kalkulationseinrichtung zur Berechnung des mindestens einen c-Wertes, und beispielsweise zusätzlich eine Kc-Wert-Kalkulationseinrichtung zur Berechnung des mindestens einen Kc-Wertes, welche im dargestellten Beispiel jeweils in dieser als Infrarotthermometervorrichtung ausgebildeten Vorrichtung 3 integriert sind. Beispielsweise kann zusätzlich eine Kalkulationseinrichtung zur Berechnung der logarithmischen Übertemperatur des Heizkörpers 1 und/oder zur Berechnung der mittleren Heizmediumübertemperatur vorgesehen sein.

Zur Durchführung des Parametrierverfahrens umfasst die Vorrichtung 3 zudem eine insbesondere als eine Infrarotschnittstelle ausgebildete Übertragungskommunikationseinrichtung zur Übertragung des mindestens einen berechneten c-Wertes und/oder des mindestens einen berechneten Kc-Wertes zum elektronischen Heizkostenverteiler 2.

Die Abfragekommunikationseinrichtung und die Übertragungskommunikationseinrichtung sind im dargestellten Beispiel identisch, d. h. als eine gemeinsame Kommunikationseinrichtung 6 in Form einer Infrarotschnittstelle ausgebildet und in der als Infrarotthermometervorrichtung ausgebildeten Vorrichtung 3 integriert. Des Weiteren sind im dargestellten Beispiel die c-Wert-Kalkulationseinrichtung und die Kc-Wert-Kalkulationseinrichtung und, falls vorhanden, die Kalkulationseinrichtung zur Berechnung der logarithmischen Übertemperatur des Heizkörpers 1 und/oder, falls vorhanden, die Kalkulationseinrichtung zur Berechnung der mittleren Heizmediumübertemperatur identisch, d. h. als eine gemeinsame Kalkulationseinrichtung 7 ausgebildet und in der als Infrarotthermometervorrichtung ausgebildeten Vorrichtung 3 integriert.

Alternativ zur Ausbildung des Thermometers 4 zur Ermittlung der mittleren Oberflächentemperatur des Heizkörpers 1 und/oder der Vorlauftemperatur und/oder der Rücklauftemperatur auf die oben beschriebene Weise als Infrarotthermometer kann dieses Thermometer 4 beispielsweise als ein Oberflächenthermometer ausgebildet sein, um diese Werte auf die oben beschriebene Weise zu ermitteln. Die mittlere Oberflächentemperatur des Heizkörpers 1 und/oder die Vorlauftemperatur und/oder die Rücklauftemperatur kann dann mittels dieses als Oberflächenthermometer ausgebildeten Thermometers 4 auf alternative Weise ermittelt werden.

Alternativ oder zusätzlich zur Messung der mittleren Oberflächentemperatur des Heizkörpers 1 mittels des Thermometers 4 auf dem Heizkörper 1 können mit dem Thermometer 4, wie oben bereits beschrieben, die Vorlauftemperatur und die Rücklauftemperatur am Heizkörper 1 und die Raumlufttemperatur des Raumes, in welchem der Heizkörper 1 angeordnet ist, ermittelt werden und die logarithmische Übertemperatur des Heizkörpers 1 aus der ermittelten Vorlauftemperatur, Rücklauftemperatur und Raumlufttemperatur berechnet werden. Auch aus diesen Werten kann die mittlere Heizmediumübertemperatur berechnet werden und zur Berechnung des c-Wertes oder der c-Werte sowie, wenn dies erfolgt, zur Berechnung des Kc-Wertes oder der Kc-Werte verwendet werden. Alternativ oder zusätzlich kann aus diesen Werten die logarithmische Übertemperatur ermittelt werden und zur Berechnung des c-Wertes oder der c-Werte sowie, wenn dies erfolgt, zur Berechnung des Kc-Wertes oder der Kc-Werte verwendet.

Alternativ zur Ausbildung der Abfragekommunikationseinrichtung und/oder der Übertragungskommunikationseinrichtung oder der gemeinsamen Kommunikationseinrichtung 6 als Infrarotschnittstelle kann beispielsweise eine Ausbildung als Funkschnittstelle vorgesehen sein, beispielsweise als Bluetoothschnittstelle, NFC-Schnittstelle oder andere Funkschnittstelle.

In einer möglichen Ausführungsform umfasst die Vorrichtung 3 zusätzlich eine, insbesondere optische, Leseeinrichtung 12 zur Auswertung eines, insbesondere als Heizkörperetikett, ausgebildeten Heizkörperdatenspeichers, insbesondere zur Auslesung einer Nennleistung des Heizkörpers 1 als Heizkörperparameter. Dies ermöglicht das Auslesen des Heizkörperetiketts und die Verwendung des ausgelesenen Wertes, beispielsweise der Nennleistung, und/oder eines oder mehrerer anderer ausgelesener Werte zur vollständigen Parametrierung des elektronischen Heizkostenverteilers 2.

Die Vorrichtung 3 umfasst im dargestellten Beispiel des Weiteren vorteilhafterweise einen Laserpointer 8, insbesondere um die mittlere Oberflächentemperatur des Heizkörpers 1 möglichst genau und somit möglichst in einem mittleren Bereich einer Heizkörperfläche des Heizkörpers 1 zu ermitteln, vorteilhafterweise einen Ein/AusSchalter 9, beispielsweise zum Aktivieren der Vorrichtung 3 und/oder zum Starten des Ermittlungsverfahrens und/oder des Parametrierverfahrens, vorteilhafterweise ein Display 10, beispielsweise zur Anzeige der mittleren Oberflächentemperatur des Heizkörpers 1 und/oder der Raumlufttemperatur und/oder der Vorlauftemperatur und/oder der Rücklauftemperatur und/oder des mindestens einen berechneten c-Wertes und/oder des mindestens einen berechneten Kc-Wertes, und vorteilhafterweise eine oder mehrere Bedienelemente 11, insbesondere Bedientasten.

BEZUGSZEICHENLISTE

1    Heizkörper
2    Heizkostenverteiler
3    Vorrichtung
4    Thermometer
5    vorrichtungsinterner Temperatursensor
6    Kommunikationseinrichtung
7    Kalkulationseinrichtung
8    Laserpointer
9    Ein/Aus-Schalter
10   Display
11   Bedienelement
12   Leseeinrichtung

P    Pfeil

**Patentansprüche**

**1.** Ermittlungsverfahren, mindestens zur Ermittlung mindestens eines c-Wertes für einen elektronischen Heizkostenverteiler (2),
**gekennzeichnet durch** folgende Verfahrensschritte:

- Montage des elektronischen Heizkostenverteilers (2) an einem Heizkörper (1),
- Inbetriebnahme des Heizkörpers (1),
- Ermittlung, insbesondere Messung, einer mittleren Oberflächentemperatur des Heizkörpers (1) und/oder Ermittlung einer Vorlauftemperatur und einer Rücklauftemperatur am Heizkörper (1), wobei die Vorlauftemperatur durch Ermittlung, insbesondere Messung, einer Oberflächentemperatur an einem Vorlauf des Heizkörpers (1) ermittelt wird und die Rücklauftemperatur durch Ermittlung, insbesondere Messung, einer Oberflächentemperatur an einem Rücklauf des Heizkörpers (1) ermittelt wird,
- Ermittlung, insbesondere Messung, einer Raumlufttemperatur eines Raumes, in welchem der Heizkörper (1) angeordnet ist,
- wobei die genannten Temperaturen jeweils nicht mit Temperatursensoren des elektronischen Heizkostenverteilers (2), sondern mit mindestens einem externen Thermometer und/oder mit mindestens einem externen Temperatursensor ermittelt werden,
- Abfrage einer Sensortemperatur mindestens eines Temperatursensors des elektronischen Heizkostenverteilers (2),
- Berechnung des mindestens einen c-Wertes,

wobei zur Berechnung des mindestens einen c-Wertes

- eine mittlere Heizmediumübertemperatur aus der mittleren Oberflächentemperatur und der Raumlufttemperatur und/oder aus der Vorlauftemperatur, der Rücklauftemperatur und der Raumlufttemperatur berechnet wird, und/oder
- eine logarithmische Übertemperatur des Heizkörpers (1) aus der Vorlauftemperatur, der Rücklauftemperatur und der Raumlufttemperatur berechnet wird.

2. Ermittlungsverfahren nach Anspruch 1,
umfassend als weitere Verfahrensschritte:

- Abfrage eines vom elektronischen Heizkostenverteiler (2) verwendeten Algorithmus,
- Berechnung des mindestens einen Kc-Wertes.

3. Ermittlungsverfahren nach einem der vorhergehenden Ansprüche,
wobei die mittlere Oberflächentemperatur und/oder die Vorlauftemperatur und/oder die Rücklauftemperatur mit einem Thermometer (4), insbesondere mit einem Infrarotthermometer oder mit einem Oberflächenthermometer, insbesondere einer Vorrichtung (3) zur Durchführung mindestens des Ermittlungsverfahrens, ermittelt wird, insbesondere gemessen wird.

4. Ermittlungsverfahren nach einem der vorhergehenden Ansprüche, umfassend zur Parametrierung des elektronischen Heizkostenverteilers (2) folgenden Verfahrensschritt:

- Übertragen des mindestens einen berechneten c-Wertes und/oder des mindestens einen berechneten Kc-Wertes zum elektronischen Heizkostenverteiler (2).

5. Ermittlungsverfahren nach einem der vorhergehenden Ansprüche,
wobei aus einem Heizkörperdatenspeicher des Heizkörpers (1) mindestens ein Heizkörperparameter des Heizkörpers (1), insbesondere eine Nennleistung des Heizkörpers (1), ausgelesen wird und zum elektronischen Heizkostenverteiler (2) übertragen wird.

6. Vorrichtung (3) zur Durchführung des Ermittlungsverfahrens nach mindestens einem der vorhergehenden Ansprüche, umfassend

- ein Thermometer (4) zur Ermittlung, insbesondere Messung, der mittleren Oberflächentemperatur des Heizkörpers (1) und/oder der Vorlauftemperatur und/oder der Rücklauftemperatur am Heizkörper (1), wobei die Vorlauftemperatur durch Ermittlung, insbesondere Messung, der Oberflächentemperatur am Vorlauf des Heizkörpers (1) ermittelbar ist und die Rücklauftemperatur durch Ermittlung, insbesondere Messung, der Oberflächentemperatur am Rücklauf des Heizkörpers (1) ermittelbar ist,
- ein Thermometer (4) oder einen Temperatursensor (5) zur Ermittlung, insbesondere Messung, der Raumlufttemperatur,
- eine Abfragekommunikationseinrichtung zur Abfrage der Sensortemperatur des mindestens einen Temperatursensors des elektronischen Heizkostenverteilers (2),
- mindestens eine Kalkulationseinrichtung (7).

7. Vorrichtung (3) nach Anspruch 6,
wobei die mindestens eine Kalkulationseinrichtung (7) zur Berechnung des mindestens einen c-Wertes und/oder zur Berechnung der mittleren Heizmediumübertemperatur und/oder zur Berechnung der logarithmischen Übertemperatur und/oder zur Berechnung des mindestens einen Kc-Wertes vorgesehen ist, insbesondere ausgebildet und eingerichtet ist.

8. Vorrichtung (3) nach Anspruch 6 oder 7,
umfassend eine Abfragekommunikationseinrichtung zur Abfrage des Algorithmus des elektronischen Heizkostenverteilers (2).

**9.** Vorrichtung (3) nach einem der Ansprüche 6 bis 8,
umfassend eine Leseeinrichtung (12) zur Auslesung eines Heizkörperdatenspeichers, insbesondere zur Auslesung mindestens eines Heizkörperparameters des Heizkörpers (1), insbesondere einer Nennleistung des Heizkörpers (1), aus dem Heizkörperdatenspeicher.

**10.** Vorrichtung (3) nach einem der Ansprüche 6 bis 9,
umfassend eine Übertragungskommunikationseinrichtung zur Übertragung des mindestens einen berechneten c-Wertes und/oder des mindestens einen berechneten Kc-Wertes und/oder des mindestens einen aus dem Heizkörperdatenspeicher ausgelesenen Heizkörperparameters, insbesondere der Nennleistung des Heizkörpers (1), zum elektronischen Heizkostenverteiler (2).

**11.** Vorrichtung (3) nach einem der Ansprüche 6 bis 10,
ausgebildet als eine Infrarotthermometervorrichtung.

**12.** Vorrichtung (3) nach einem der Ansprüche 6 bis 11,
wobei das Thermometer (4) als ein Infrarotthermometer oder als ein Oberflächenthermometer ausgebildet ist.


**Claims**

**1.** Determining method, at least for determining at least one c-value for an electronic heat cost allocator (2), **characterized by** the following method steps:

- mounting the electronic heat cost allocator (2) on a radiator (1),
- starting up the radiator (1),
- determining, in particular measuring, an average surface temperature of the radiator (1) and/or determining a feed temperature and a return temperature at the radiator (1), wherein the feed temperature is determined by determining, in particular measuring, a surface temperature at a feed of the radiator (1) and the return temperature is determined by determining, in particular measuring, a surface temperature at a return of the radiator (1),
- determining, in particular measuring, a room air temperature of a room in which the radiator (1) is arranged,
- wherein the aforementioned temperatures are each determined by at least one external thermometer and/or by at least one external temperature sensor, rather than by temperature sensors of the electronic heat cost allocator (2),
- requesting a sensor temperature of at least one temperature sensor of the electronic heat cost allocator (2),
- calculating the at least one c-value,

wherein for calculating the at least one c-value

- an average heating medium overtemperature is calculated from the average surface temperature and the room air temperature and/or from the feed temperature, the return temperature and the room air temperature, and/or
- a logarithmic overtemperature of the radiator (1) is calculated from the feed temperature, the return temperature and the room air temperature.

**2.** Determining method according to Claim 1,
comprising as further method steps:

- requesting an algorithm used by the electronic heat cost allocator (2),
- calculating the at least one Kc-value.

**3.** Determining method according to either of the preceding claims,
wherein the average surface temperature and/or the feed temperature and/or the return temperature are/is determined, in particular are/is measured, by a thermometer (4), in particular by an infrared thermometer or by a surface thermometer, in particular an apparatus (3) for carrying out at least the determining method.

**4.** Determining method according to any of the preceding claims, comprising the following method step for parametrizing the electronic heat cost allocator (2):

- transmitting the at least one calculated c-value and/or the at least one calculated Kc-value to the electronic heat cost allocator (2).

5. Determining method according to any of the preceding claims,
   wherein at least one radiator parameter of the radiator (1), in particular a rated output of the radiator (1), is read out from a radiator data memory of the radiator (1) and is transmitted to the electronic heat cost allocator (2).

6. Apparatus (3) for carrying out the determining method according to at least one of the preceding claims, comprising:

   - a thermometer (4) for determining, in particular measuring, the average surface temperature of the radiator (1) and/or the feed temperature and/or the return temperature at the radiator (1), wherein the feed temperature is determinable by determining, in particular measuring, the surface temperature at the feed of the radiator (1) and the return temperature is determinable by determining, in particular measuring, the surface temperature at the return of the radiator (1),
   - a thermometer (4) or a temperature sensor (5) for determining, in particular measuring, the room air temperature,
   - a request communication device for requesting the sensor temperature of the at least one temperature sensor of the electronic heat cost allocator (2),
   - at least one calculation device (7).

7. Apparatus (3) according to Claim 6,
   wherein the at least one calculation device (7) is provided, in particular is configured and designed, for calculating the at least one c-value and/or for calculating the average heating medium overtemperature and/or for calculating the logarithmic overtemperature and/or for calculating the at least one Kc-value.

8. Apparatus (3) according to Claim 6 or 7,
   comprising a request communication device for requesting the algorithm of the electronic heat cost allocator (2).

9. Apparatus (3) according to any of Claims 6 to 8,
   comprising a read device (12) for reading a radiator data memory, in particular for reading out at least one radiator parameter of the radiator (1), in particular a rated output of the radiator (1), from the radiator data memory.

10. Apparatus (3) according to any of Claims 6 to 9,
    comprising a transmission communication device for transmitting the at least one calculated c-value and/or the at least one calculated Kc-value and/or the at least one radiator parameter read out from the radiator data memory, in particular the rated output of the radiator (1), to the electronic heat cost allocator (2).

11. Apparatus (3) according to any of Claims 6 to 10,
    configured as an infrared thermometer apparatus.

12. Apparatus (3) according to any of Claims 6 to 11,
    wherein the thermometer (4) is configured as an infrared thermometer or as a surface thermometer.

**Revendications**

1. Procédé de détermination, destiné au moins à déterminer au moins une valeur c d'un répartiteur de coûts de chauffage électronique (2),
   **caractérisé par** les étapes de procédé suivantes :

   - monter le répartiteur de coûts de chauffage électronique (2) sur un radiateur (1),
   - mettre le radiateur (1) en service,
   - déterminer, notamment mesurer, une température de surface moyenne du radiateur (1) et/ou déterminer une température de canalisation montante et une température de canalisation de retour sur le radiateur (1),la température de canalisation montante étant déterminée par détermination, notamment mesure, d'une température de surface sur une canalisation montante du radiateur (1) et la température de canalisation de retour étant déterminée par détermination, notamment mesure, d'une température de surface sur une canalisation de retour du radiateur (1),
   - déterminer, notamment mesurer, une température d'air ambiant d'un local dans lequel le radiateur (1) est placé,

- lesdites températures étant déterminées non pas par des capteurs de température du répartiteur de coûts de chauffage électronique (2), mais par au moins un thermomètre extérieur et/ou au moins un capteur de température extérieur,
- interroger une température de capteur d'au moins un capteur de température du répartiteur de coûts de chauffage électronique (2),
- calculer au moins une valeur c,

pour calculer au moins une valeur c

- une élévation de température de milieu caloporteur moyenne étant calculée à partir de la température de surface moyenne et de la température d'air ambiant et/ou de la température de canalisation montante, de la température de canalisation de retour et de la température d'air ambiant, et/ou
- une élévation de température logarithmique du radiateur (1) étant calculée à partir de la température de canalisation montante, de la température de canalisation de retour et de la température d'air ambiant.

2.  Procédé de détermination selon la revendication 1,
    comprenant comme autres étapes de procédé :

    - interroger un algorithme utilisé par le répartiteur de coûts de chauffage électronique (2),
    - calculer au moins une valeur Kc.

3.  Procédé de détermination selon l'une des revendications précédentes,
    la température de surface moyenne et/ou la température de canalisation montante et/ou la température de canalisation de retour étant déterminée, en particulier mesurée, par un thermomètre (4), en particulier par un thermomètre infrarouge ou par un thermomètre de surface, en particulier un dispositif (3) destiné à mettre en oeuvre au moins le procédé de détermination.

4.  Procédé de détermination selon l'une des revendications précédentes, comprenant l'étape suivante afin de paramétrer le répartiteur de coûts de chauffage électronique (2) :

    - transmettre l'au moins une valeur c calculée et/ou l'au moins une valeur Kc calculée au répartiteur de coûts de chauffage électronique (2).

5.  Procédé de détermination selon l'une des revendications précédentes,
    au moins un paramètre du radiateur (1), en particulier une puissance nominale du radiateur (1), étant lu dans une mémoire de données de radiateur (1) et transmis au répartiteur de coûts de chauffage électronique (2).

6.  Dispositif (3) destiné à mettre en oeuvre le procédé de détermination selon au moins l'une des revendications précédentes, ledit dispositif comprenant

    - un thermomètre (4) destiné à déterminer, notamment mesurer, la température de surface moyenne du radiateur (1) et/ou la température de canalisation montante et/ou la température de canalisation de retour sur le radiateur (1), la température de canalisation montante pouvant être déterminée par détermination, notamment mesure, de la température de surface sur la canalisation montante du radiateur (1) et la température de canalisation de retour pouvant être déterminée par détermination, notamment mesure, de la température de surface sur la canalisation de retour du radiateur (1),
    - un thermomètre (4) ou un capteur de température (5) destiné à déterminer, notamment mesurer, la température d'air ambiant,
    - un module de communication d'interrogation destiné à interroger la température de l'au moins un capteur de température du répartiteur de coûts de chauffage électronique (2),
    - au moins un module de calcul (7).

7.  Dispositif (3) selon la revendication 6,
    l'au moins un module de calcul (7) étant prévu, en particulier conçu et adapté, pour calculer l'au moins une valeur c et/ou pour calculer l'élévation de température d'agent caloporteur moyenne et/ou pour calculer l'élévation de température logarithmique et/ou pour calculer l'au moins une valeur Kc.

8.  Dispositif (3) selon la revendication 6 ou 7,

comprenant un dispositif de communication d'interrogation destiné à interroger l'algorithme du répartiteur de coûts de chauffage électronique (2).

9. Dispositif (3) selon l'une des revendications 6 à 8,
comprenant un module de lecture (12) destiné à lire une mémoire de données de radiateur, notamment à lire au moins un paramètre du radiateur (1), notamment une puissance nominale du radiateur (1), dans la mémoire de données de radiateur.

10. Dispositif (3) selon l'une des revendications 6 à 9,
comprenant un module de communication de transmission destiné à transmettre l'au moins une valeur c calculée et/ou l'au moins une valeur Kc calculée et/ou l'au moins un paramètre de radiateur lu dans la mémoire de données de radiateur, en particulier la puissance nominale du radiateur (1), au répartiteur de coûts de chauffage électronique (2).

11. Dispositif (3) selon l'une des revendications 6 à 10, conçu comme un dispositif à thermomètre infrarouge.

12. Dispositif (3) selon l'une des revendications 6 à 11,
le thermomètre (4) étant conçu comme un thermomètre infrarouge ou comme un thermomètre de surface.

FIG 1

FIG 2

**EP 3 708 984 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005045198 B3
- DE 9317309 U1
- DE 19800041 A1